# EUROPEAN PATENT SPECIFICATION

(11) **EP 1 475 907 B1**
(45) Date of publication and mention of the grant of the patent: **07.09.2005**
(21) Application number: 03010145.5
(22) Date of filing: 05.05.2003
(51) Int. Cl.: H04B 10/158, H04B 10/08

(54) **A method of testing an optical electrical converter**
Opto-elektrisches Umsetzerprüfungsverfahren
Méthode de test d'un convertisseur optique-electrique

(43) Date of publication of application: 10.11.2004
(60) Divisional application: 04001825.1
(73) Proprietor: Harman Becker Automotive Systems GmbH, 76307 Karlsbad (DE)
(72) Inventor: Becht, Markus, 76359 Marxzell-Pfaffenrot (DE); Jurzitza, Dieter, Dr., 76131 Karlsruhe (DE); Schöpp, Harald, 76275 Ettlingen (DE)
(74) Representative: Grünecker, Kinkeldey, Stockmair & Schwanhäusser Anwaltssozietät

(56) References cited:
- US-A- 5 652 668
- PATENT ABSTRACTS OF JAPAN vol. 006, no. 060 (E-102), 17 April 1982 (1982-04-17) & JP 57 003443 A (TOSHIBA CORP), 8 January 1982 (1982-01-08)

## Description

The invention concerns a method of testing an optical electrical converter which receives an optical input signal and provides an electrical output signal. Such converters are typically employed in broadband high speed optical data communication networks which have found widespread use in transmitting audio and video data.

Optical electrical converters are components that vary its electrical output signal dependent on optical input signal, e.g. photo resistors, photo diodes or photo transistors. They are typically manufactured as highly integrated semiconductor components with a highly complex procedure that allows production of high volumes at low costs. The manufacturing process due to its complexity often produces failure rates in the range of 0.5% to 5%. Consequently, each component is tested before being sold by applying a test signal and monitoring the output signal to determine whether it lies in a given tolerance range. However, it has been realized that the conventional performance test is insufficient insofar as certain failures in the converter only appear in a combination of special environmental conditions. However, to do performance tests by applying various environmental influences (e.g. temperature variations) is very time consuming and cost intensive.

An example of a prior art testing method can be found in US 5 652 668.

Consequently, in many cases environmental tests are only done with very few parts from time to time to spot check the production. However, also this procedure is unsatisfactory, as it is highly unreliable and might take considerable time to detect failures.

Therefore, a need arises for a testing method being able to quickly and reliably detect failures in optical electrical converters to distinguish between good and bad components.

The invention provides a method of testing an optical electrical converter as set forth in claim 1. The invention is based on the idea of applying input signals with a parameter that is out of the specified application range. By doing so, the device under test (DUT) is forced to exhibit results that do not occur under normal environmental conditions. More specifically, when applying an input signal, which is "beyond the limits" of normal application range, the internal point of operation of the DUT is shifted to the extreme and will possibly even exhibit a failure mechanism. Thus, by evaluating the results, it is possible to distinguish between good devices and failure devices, as the performance of good and bad converters differ significantly from each other.

According to a preferred embodiment, the input signal parameter is the duty cycle of the optical input signal. Instead of applying a fixed duty cycle value, which is used in actual operation of the converter (e.g. close to 50%), a lower or higher duty cycle out of the application range defined by the limits of normal operation are applied to the device under test.

According to a variant of the method, the optical input signal is a modulated signal with a non-modulated component superimposed. By adding a non-modulated component to the modulated input signal, the internal balancing of the DUT is shifted according to the level of non-modulated light. Hence, the performance of the DUT exhibits similar effects as a variation of the duty cycle out of the normal specified application range.

According to a preferred embodiment of the testing method, an evaluation step of the result considers the distortion (e.g. timing distortion) and/or the noise of the output signal.

Advantageously, in an embodiment of the method, the evaluation step includes a comparison of the output signal with at least one nominal value or a given tolerance range.

According to a further variant of the testing method, optical input signals with two different duty cycles are applied to the DUT and the output signals in response thereto are evaluated. By varying the duty cycle either by a predetermined pattern or dynamically and evaluating the output signals, it is already possible to distinguish good from bad components, as the output signals of each converter under test will be affected by this stimulation.

In the following the invention will be described in further detail with reference to the enclosed drawings which show:
- **Figure 1**: a circuit arrangement for testing an optical electrical converter;
- **Figure 2**: a flow chart illustrating the steps of a testing method under application of an input signal with a parameter out of application range;
- **Figure 3**: a flow chart illustrating the steps of a testing method applying a modulated input signal with a non-modulated component;
- **Figure 4**: a flow chart illustrating the steps of a testing method using a duty cycle variation; and
- **Figure 5**: illustrative examples for variations of the duty cycle out of the specified application range.

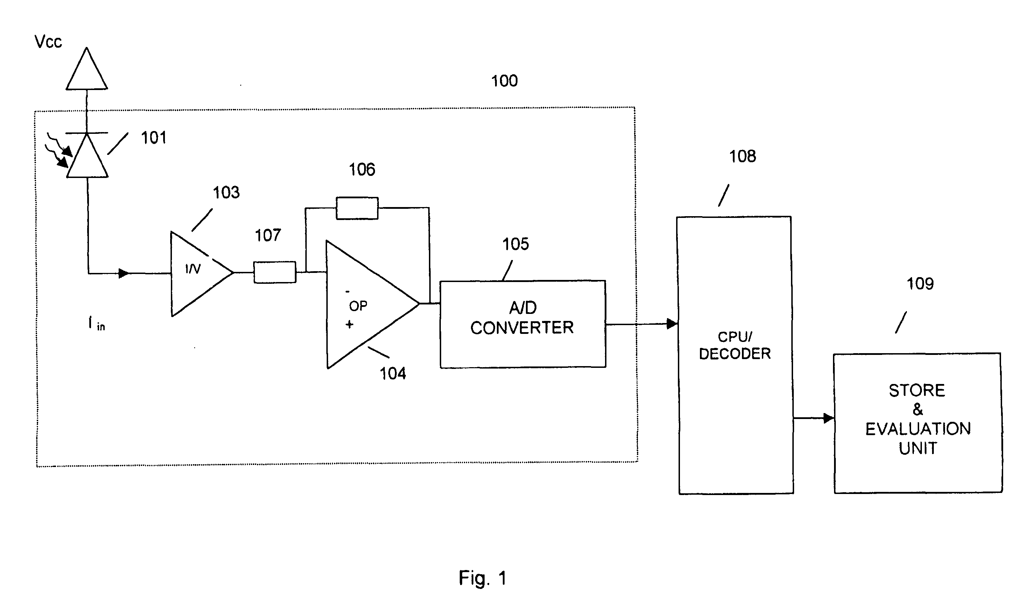

Figure 1 shows an optical electrical converter 100, which is used as a component in optical data bus systems for audio and video transmission. Such optical data networks have found widespread use and are typically standardized, such as IEEE 1394, D2B Optical , BYTEFLIGHT, FLEXRAY, MOST or SPDIF.

In figure 1, the converter 100 is exemplarily shown with the dashed line and includes a photo diode 101. The photo diode 101 receives a positive voltage V_{cc} and generates an input current Iᵢₙ to flow when an optical input signal is received by its photo sensitive surface. The input current Iᵢₙ is subsequently converted in a current/voltage converter 103 before being applied to the negative input of an operational amplifier with feedback resistor 106 and input resistor 107. The output of the operational amplifier is applied to an analog/digital converter 105 for outputting a digital signal.

As indicated with the dashed line, the internal analog signals can not be accessed externally. The converter is connected to a decoder or CPU 108. Further, a typical testing arrangement includes a store-and-evaluation unit 109 to determine whether the actual converter under test is a good part or failure part.

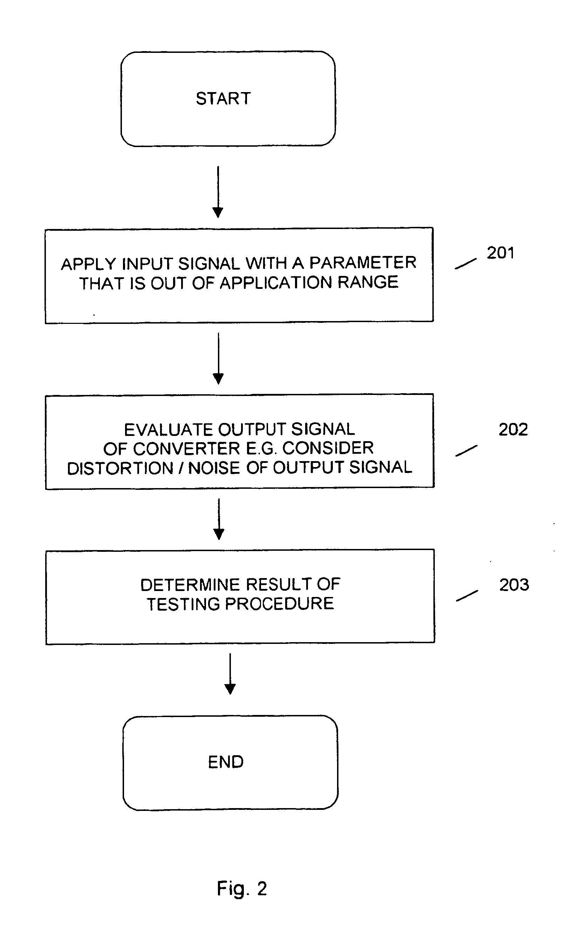

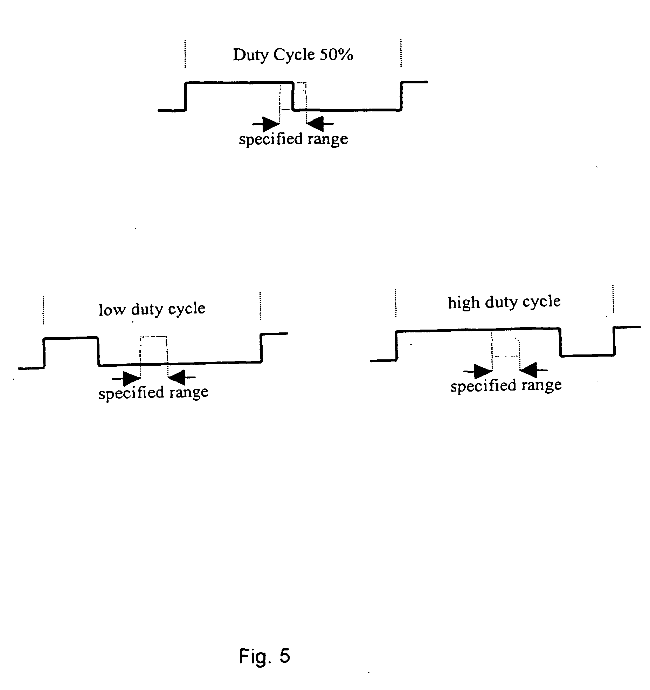

Figure 2 illustrates the steps of a testing method under application of an input signal with a parameter that is out of the normal application range. More specifically, an input signal is applied to the DUT with a parameter that is out of a specified application range being defined by the limits of normal operation characteristics of the converter (step 201). For example, the specified range for a normal operation for the duty cycle could be 45% to 55%. In this case, a signal having a low or high duty cycle out of the specified range, e.g. 30% or 70% could be applied, as illustrated in Figure 5 described below.

The respective output signal of the converter is stored and evaluated in step 202. As an example, the timing distortion or the noise contained in the output signal could be stored and compared with at least one nominal value for a give tolerance range. Hence, by applying a specific stimulating input signal possibly even violating the specified application range of the DUT, provided that the device is not damaged by this signal, the internal balancing mechanism of the converter will be influenced such that it exhibits a significant difference in the performance of good and bad parts. This allows to separate good from bad parts very easily (step 203) without the need for applying environmental influences, such as temperature variations, in a specific combination.

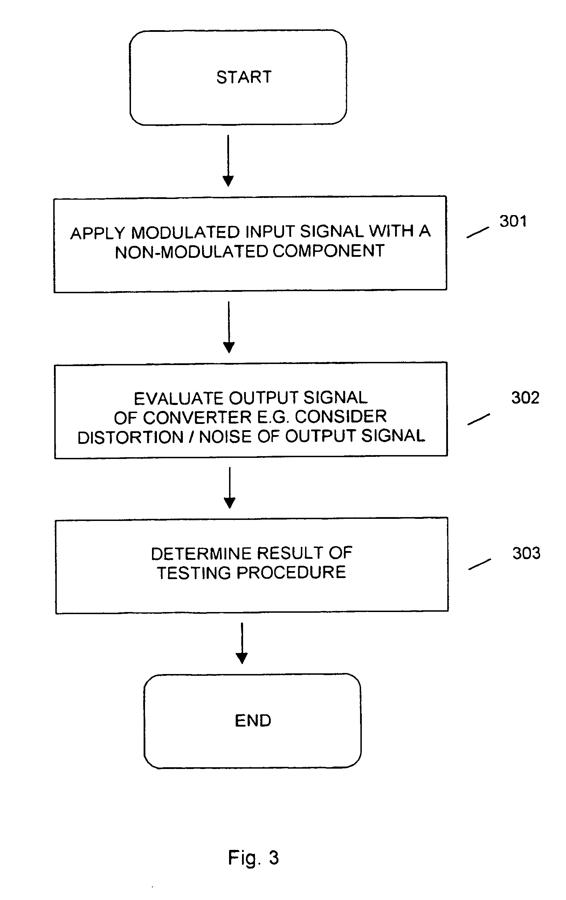

In figure 3 a variant of the testing method is shown. Whereas in the testing method illustrated in figure 2, an input signal with a parameter out of the application range is applied to the DUT, in the method shown in figure 3, an input signal with a superimposed non-modulated component is applied to the converter in step 301. This achieves a similar effect as the application of an input signal "beyond the limits" of normal operation, namely resulting in a shift of the internal balancing of the device according to the level of the non-modulated optical input signal. Consequently, after evaluation of the output signal (step 302) the result of the testing procedure may be easily determined in step 303.

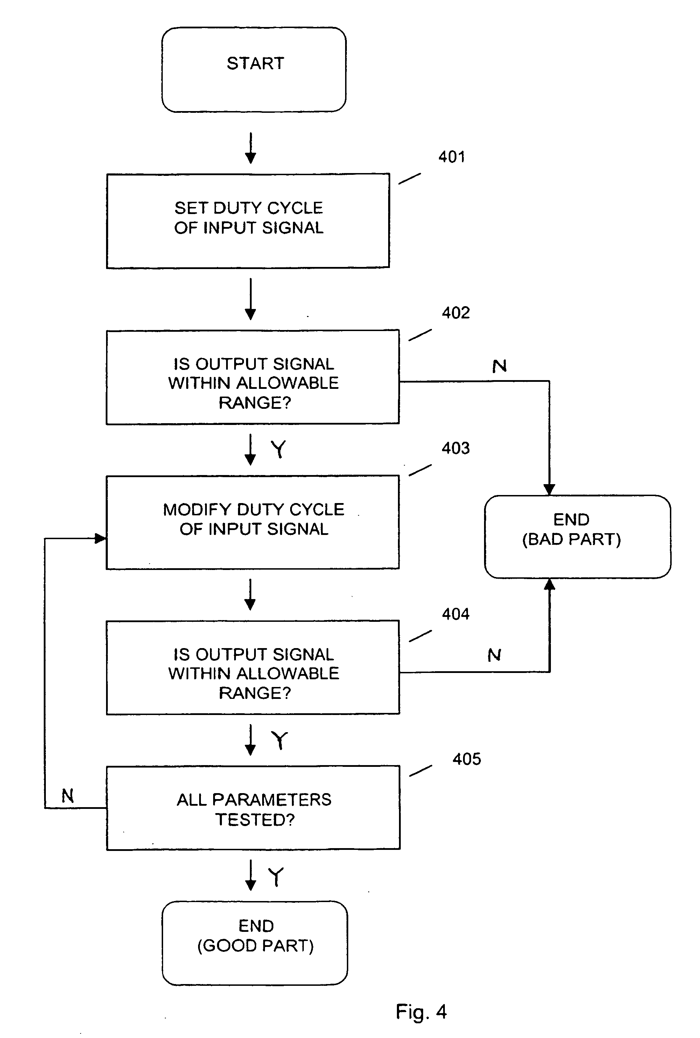

Figure 4 illustrates a testing procedure involving a modification of the duty cycle of the input signal. Whereas conventional methods only apply a test procedure with a fixed duty cycle close to that used in actual operation, the duty cycle is at least varied once.

Upon initial set of the duty cycle of the input signal in step 401, in a first evaluation step, it is checked whether the output signal lies within an allowable tolerance range (step 402). If the result is already negative, it is determined that a failure has been detected in the DUT. In case the output signal is within the allowable range, the duty cycle of the input signal is modified as indicated in step 403. Subsequently, it is again checked whether the output signal lies within the allowable tolerance range (step 404). In the event that the result is negative, i.e. that the output signal is outside the tolerance range, the DUT is determined to be a bad part. Finally, it is checked whether all parameters have been tested in step 405. If so, it is decided that the DUT is a good part, otherwise the procedure reiterates the steps 403 to 405.

Figure 5 shows in the upper half an example for a duty cycle and the specified application range defined by the limits of normal operation. More specifically, the duty cycle is close to 50% with a variation of 5%. In the lower half of figure 5, the input signals of the test procedure, according to the invention, are shown. As apparent therefrom, the duty cycle takes either a low or high value (for instance 30% and 70%, respectively) that is clearly outside of the specified application range. Such extreme settings of the duty cycle of the input signal will not damage the converter but influence the internal balancing mechanism in a way that the difference in performance between good and bad parts will be immediately apparent. Consequently, quick and reliable testing of the converters can be performed without applying a combination of environmental conditions.

## Claims

1. A method of testing an optical electrical converter which receives an optical input signal and provides an electrical output signal comprising the following steps:
a) applying (301) the optical input signal with a duty cycle that is out of a specified application range being defined by the limits of normal operational characteristics of the converter; and
b) evaluating (302) the electrical output signal of the converter including a comparison of the output signal with at least one nominal value in response to the input signal applied in step a) to determine (303) the result of the testing procedure.

2. The method according to claim 1, wherein the duty cycle is varied during the testing procedure.

3. The method according to claim 1 or 2, wherein the application range for the duty cycle lies in a range of 35% to 65%, preferably 45% to 55%.

4. The method according to one of claims 1 to 5, wherein the optical input signal applied in step a) is a modulated input signal with a non-modulated component superimposed.

5. The method according to one of claims 1 to 4, wherein the evaluation step (302) considers the distortion and/or noise of the output signal.

6. The method according to one of claims 1 to 5, wherein the optical electrical converter is used as a component in a standardized optical databus, such as D2B Optical, Flexray, Byteflight, MOST, IEEE 1394 or SPDIF.

## Patentansprüche

1. Verfahren zum Prüfen eines optoelektrischen Wandlers, der ein optisches Eingangssignal empfängt und ein elektrisches Ausgangssignal erzeugt, das die folgenden Schritte umfasst:
a) Anlegen (301) des optischen Eingangssignals mit einem Tastverhältnis, das außerhalb eines spezifizierten Anwendungsbereiches liegt, der durch die Grenzen normaler Betriebskennlinien des Wandlers definiert wird; und
b) Bewerten (302) des elektrischen Ausgangssignals des Wandlers, wobei dies einen Vergleich des Ausgangssignals mit wenigstens einem Nennwert in Reaktion auf das in Schritt a) angelegte Eingangssignal einschließt, um das Ergebnis des Prüfvorgangs zu bestimmen (303).

2. Verfahren nach Anspruch 1, wobei das Tastverhältnis während des Prüfvorgangs verändert wird.

3. Verfahren nach Anspruch 1 oder 2, wobei der Anwendungsbereich für das Tastverhältnis in einem Bereich zwischen 35 % und 65 %, vorzugsweise 45 % und 55 %, liegt.

4. Verfahren nach einem der Ansprüche 1 bis 5, wobei das optische Eingangssignal, das in Schritt a) angelegt wird, ein moduliertes Eingangssignal mit einer überlagernden nicht modulierten Komponente ist.

5. Verfahren nach einem der Ansprüche 1 bis 4, wobei der Bewertungsschritt (302) die Verzerrung und/oder das Rauschen des Ausgangssignals berücksichtigt.

6. Verfahren nach einem der Ansprüche 1 bis 5, wobei der optoelektrische Wandler als eine Komponente in einem standardisierten optischen Datenbus, wie beispielsweise D2B Optical, Flexray, Byteflight, MOST, IEEE 1394 oder SPDIF, eingesetzt wird.

## Revendications

1. Procédé pour tester un convertisseur optique électrique qui reçoit un signal d'entrée optique et fournit un signal de sortie électrique comprenant les étapes suivantes :
(a) appliquer (301) le signal d'entrée optique avec un cycle opératoire qui se situe hors d'une gamme d'application spécifiée définie par les limites des caractéristiques opérationnelles normales du convertisseur ; et
(b) évaluer (302) le signal de sortie électrique du convertisseur comprenant une comparaison du signal de sortie avec au moins une valeur nominale en réponse au signal d'entrée appliqué dans l'étape (a) pour déterminer (303) le résultat de la procédure de test

2. Procédé selon la revendication 1, dans lequel le cycle opératoire est modifié lors de la procédure de test

3. Procédé selon la revendication 1 ou 2, dans lequel la gamme d'application pour le cycle opératoire réside dans une gamme allant de 35% à 65%, de préférence de 45% à 55%.

4. Procédé selon l'une quelconque des revendications 1 à 3, dans lequel le signal d'entrée optique appliqué dans l'étape (a) est un signal d'entrée modulé avec un composant non modulé superposé.

5. Procédé selon l'une quelconque des revendications 1 à 4, dans lequel l'étape d'évaluation (302) considère la distorsion et/ou le bruit du signal de sortie.

6. Procédé selon l'une quelconque des revendications 1 à 5, dans lequel le convertisseur optique électrique est utilisé en tant que composant dans un bus de données optiques standardisé, telles qu'un D2B optical, un Flescray, un Byteflight, un MOST, un IEEE 1394 ou un SPDIF.
